# EUROPÄISCHE PATENTSCHRIFT

(11) **EP 1 380 476 B1**
(45) Veröffentlichungstag und Bekanntmachung des Hinweises auf die Patenterteilung: **31.08.2005**
(21) Anmeldenummer: 03012605.6
(22) Anmeldetag: 03.06.2003
(51) Int. Cl.: B60R 21/20

(54) **Luftsackmodul für ein Fahrzeug und Verfahren zur Befestigung eines Luftsacks an einem Luftsackhalter des Luftsackmoduls**
Airbag module for a vehicle and method for fixing the bag to a support of the airbag module
Module d'airbag pour un véhicule et méthode de fixation du sac à un support du module

(30) Priorität: 08.07.2002 GB 0215692
(43) Veröffentlichungstag der Anmeldung: 14.01.2004
(73) Patentinhaber: Delphi Technologies, Inc., Troy, MI 48007 (US)
(72) Erfinder: Hannemann, Sabina, 13127 Berlin (DE); Hannemann, Jens, 13127 Berlin (DE)
(74) Vertreter: Manitz, Finsterwald & Partner GbR

(56) Entgegenhaltungen:
- EP-A- 1 172 264
- DE-A- 4 141 475
- DE-A- 19 928 696
- DE-U- 20 012 077

## Beschreibung

Die vorliegende Erfindung betrifft ein Luftsackmodul für ein Fahrzeug und ein Verfahren zur Befestigung eines Luftsacks an einem Luftsackhalter des Luftsackmoduls.

Als Rückhaltesystem zum Schutz von Fahrzeuginsassen werden vielfach Luftsackmodule eingesetzt, die einen an einem Luftsackhalter des Luftsackmoduls befestigten Luftsack aufweisen, der bei einem Aufprall durch ein von einem Gasgenerator des Luftsackmoduls abgegebenes Gas aufgeblasen wird und so für eine sehr kurze Zeit ein Aufprallkissen bildet.

Zum Schutz des Fahrers eines Kraftfahrzeugs wird dabei häufig ein Luftsackmodul am Lenkrad des Fahrzeugs befestigt. Die Luftsackmodule werden dabei typischerweise im Bereich des Pralltopfs befestigt und wenigstens teilweise durch ein Emblem abgedeckt, das beispielsweise ein Logo des Fahrzeugherstellers tragen kann. Es sind Luftsackmodule bekannt, die es erlauben, das an dem Lenkrad befestigte Emblem bei Auslösen des Luftsackmoduls und Entfaltung des Luftsacks im Wesentlichen stationär zu halten. Diese Anordnung reduziert das Risiko, dass das Emblem bei der Entfaltung des Luftsacks mit dem Fahrzeuginsassen bzw. Fahrer in Berührung kommt. In einem solchen Luftsackmodul wird ein Luftsack verwendet, der bei Entfaltung ein ringartiges Kissen ergibt. Dieser kann die gleiche Form aufweisen wie ein konventioneller Luftsack, wobei jedoch ein in der Mitte eines Frontabschnitts des Luftsacks angeordneter Befestigungsbereich mit dem Luftsackmodul fest verbunden ist und so während der Entfaltung des Luftsacks festgehalten wird. Das ringförmige Kissen bzw. der Luftsack ist an dem Luftsackmodul mittels eines Metallblechs in einer Abdeckung des Luftsackmoduls oder mittels des Emblems befestigt. Der Befestigungsbereich ist mittels einer Emblembefestigung befestigt, die als separates Teil ausgelegt ist. Eine derartige Anordnung ist aus der gattungsbildenden DE 200 12 077 U bekannt.

Eine solche Befestigung des Befestigungsbereichs an dem Luftsackmodul ist jedoch vergleichsweise aufwendig.

Der vorliegenden Erfindung liegt daher die Aufgabe zugrunde, ein Luftsackmodul zu schaffen, bei dem ein zentraler Befestigungsbereich des Luftsacks einfach an dem Luftsackmodul befestigbar ist, so dass beim Aufblasen bzw. Füllen des Luftsacks ein im Wesentlichen ringartig geformtes Kissen entsteht, sowie ein entsprechendes Verfahren zur Befestigung eines Luftsacks an einem Luftsackmodul bereitzustellen.

Die Aufgabe wird gelöst durch ein Luftsackmodul mit den Merkmalen des Anspruchs 1.

Das erfindungsgemäße Luftsackmodul umfasst einen Luftsack, der einen Luftsackmund und einen Frontabschnitt mit wenigstens einer Befestigungsöffnung aufweist, und einen wenigstens teilweise in dem Luftsack angeordneten Luftsackhalter mit wenigstens einer umbiegbaren Zunge, die zur Befestigung des Frontabschnitts durch die Befestigungsöffnung führbar und dann um einen Rand der Befestigungsöffnung biegbar ist.

Die Aufgabe wird weiterhin gelöst durch das Verfahren zur Befestigung eines Luftsacks mit den Merkmalen des Anspruchs 16.

Bei dem erfindungsgemäßen Verfahren zur Befestigung eines Luftsacks, der einen Luftsackmund und einen Frontabschnitt mit wenigstens einer Befestigungsöffnung aufweist, an einem Luftsackhalter mit wenigstens einer umbiegbaren Zunge, wird durch eine Relativbewegung zwischen wenigstens einem Bereich des Luftsacks mit der Befestigungsöffnung und dem Luftsackhalter die Zunge in die Befestigungsöffnung geführt, und dann um einen Rand der Befestigungsöffnung gebogen. Durch eine Relativbewegung zwischen wenigstens einem Bereich des Luftsacks mit der Befestigungsöffnung und dem Luftsackhalter wird der Luftsackhalter wenigstens teilweise in den Luftsack eingeführt.

Das erfindungsgemäße Luftsackmodul kann neben dem Luftsack und dem Luftsackhalter insbesondere noch einen Gasgenerator enthalten, mittels dessen bei Auslösung des Luftsackmoduls Gas in den Luftsack führbar ist.

Unter dem Frontabschnitt des Luftsacks wird derjenige Abschnitt verstanden, der bei einer Entfaltung des Luftsacks einen als Auffangfläche für einen Fahrzeuginsassen vorgesehenen Bereich sowie gegebenenfalls einen von diesem wenigstens teilweise umschlossenen Mittelbereich umfasst und vorzugsweise aus diesen Bereichen besteht. Bis auf den eventuell vorhandenen, wenigstens teilweise umschlossenen Mittelbereich kann der Frontabschnitt somit dem Fahrzeuginnenraum zu- und damit von einem Grundkörper des Luftsackmoduls abgewandt sein. Insbesondere kann er sich so wenigstens teilweise im Wesentlichen quer zu einer Hauptentfaltungsrichtung des Luftsacks, d.h. zu einer vermuteten Aufprallrichtung eines Fahrzeuginsassen, erstrecken.

Die Befestigungsöffnung kann zum einen in einer Lage des Luftsackmaterials in dem Frontabschnitt des Luftsacks selbst ausgebildet sein, wobei dieser jedoch nicht unbedingt einlagig ausgebildet zu sein braucht. Zum anderen kann die Befestigungsöffnung mittels eines mit einer Lage des Luftsackmaterials des Frontabschnitts verbundenen, vorzugsweise vernähten, verklebten und/oder verschweißten, Teils allein oder in Verbindung mit der Lage bereitgestellt sein. Insbesondere in diesem Fall kann eine besonders hohe Dichtigkeit des Luftsacks im Bereich der Befestigung erhalten werden, da die Lage des Luftsackmaterials im Frontabschnitt zur Bildung einer Befestigungsöffnung nicht vollständig durchbrochen zu sein braucht.

Die Befestigungsöffnung kann dabei insbesondere in dem Mittelbereich angeordnet sein. Weiterhin ist ein Luftsackmund vorzugsweise nicht in dem Frontabschnitt ausgebildet.

Der Luftsack kann noch einen rückwärtigen Abschnitt aufweisen, der entgegen der Hauptentfaltungsrichtung des Luftsacks orientiert ist und einen Luftsackmund enthalten kann.

Der Luftsackhalter kann grundsätzlich einstückig mit einem Grundkörper des Luftsackmoduls oder als separat an dem Grundkörper zu befestigendes Teil ausgebildet sein. Nach der Montage ist er wenigstens teilweise in dem Luftsack des Luftsackmoduls angeordnet.

Der Luftsackhalter weist eine umbiegbare Zunge auf, die zur Befestigung des Frontabschnitts im Bereich der Befestigungsöffnung durch diese Befestigungsöffnung führbar und dann um einen Rand der Befestigungsöffnung biegbar ist. Die Zunge kann dabei grundsätzlich einen beliebigen Querschnitt aufweisen, ist jedoch vorzugsweise flach geformt, wodurch eine bessere Verteilung von Kräften auf den Rand der Befestigungsöffnung erfolgen kann.

Zur Befestigung des Frontabschnitts braucht also nur durch eine Relativbewegung zwischen dem Bereich des Luftsacks mit der Befestigungsöffnung und dem Luftsackhalter die Zunge in die Befestigungsöffnung geführt und dann um den Rand der Befestigungsöffnung gebogen zu werden. Vor dieser Relativbewegung, mit dieser Relativbewegung oder nach dieser kann dabei der Luftsackmund durch eine Relativbewegung zu dem Luftsackhalter wenigstens teilweise über diesen gestülpt bzw. geführt werden.

Auf diese Weise wird eine sehr einfache Befestigung des Frontabschnitts des Luftsacks an dem Luftsackhalter erreicht, ohne dass separat zu handhabende Befestigungsmittel wie beispielsweise Schrauben oder eine Emblembefestigung notwendig sind. Dies erleichtert wesentlich die Herstellung des erfindungsgemäßen Luftsackmoduls unabhängig von der Befestigung des Emblems. Weiterhin sind zur Montage keine besonderen Werkzeuge notwendig, was den Montageaufwand weiterhin reduziert.

Durch geeignete Wahl der Lage der Befestigungsöffnung, zweckmäßig in einem zentralen bzw. mittleren Bereich des Frontabschnitts, und geeignete Ausbildung des Luftsackhalters kann so insbesondere ein Luftsackmodul erhalten werden, das bei Auslösen ein im Wesentlichen ringartig geformtes Kissen bildet, wobei der Bereich im Inneren des Rings fest an dem Luftsackhalter gehalten wird, so dass auch ein darüber angeordnetes Emblem in einer festen Lage relativ zu dem Luftsackmodul bzw. dem Luftsackhalter und damit der Lenksäule gehalten werden kann. Das erfindungsgemäße Luftsackmodul kann somit insbesondere als Fahrerairbag verwendet werden, wenn es am Lenkrad montiert ist.

Weiterbildungen und bevorzugte Ausführungsformen der Erfindung sind in der Beschreibung, den Ansprüchen und den Zeichnungen beschrieben.

Vorzugsweise ist der Luftsack so geformt, dass er bei Entfaltung ein ringartig geformtes Kissen ergibt.

Die Befestigungsöffnung kann auf unterschiedliche Weise bereitgestellt werden.

Bei einer Ausführungsform der Erfindung ist es bevorzugt, dass die Befestigungsöffnung als Durchgangsöffnung in dem Frontabschnitt ausgebildet ist. Ein solcher Luftsack ist sehr einfach herstellbar, da er sich von einem konventionellen Luftsack nur durch die Befestigungsöffnungen zu unterscheiden braucht.

Es ist weiterhin bevorzugt, dass der Luftsack in dem Frontabschnitt wenigstens teilweise zweilagig ist, und dass die Befestigungsöffnung in der inneren Lage des Luftsacks ausgebildet ist. Die äußere Lage weist dann keine Öffnungen auf und dient unter anderem der Abdichtung des Luftsacks im Bereich der Befestigungsöffnung. Auf diese Weise können eine sehr guter Abdichtung, eine einfache Montage und eine gute Übertragung der Kräfte auf die anderen Abschnitte des Luftsacks erreicht werden. Die innere oder äußere Lage kann beispielsweise durch Aufnähen, Verschweißen oder Verkleben eines entsprechenden Lappens aus einem flexiblen Material, vorzugsweise dem Material des restlichen Luftsacks, mit der äußeren bzw. inneren Lage gebildet sein. Die Verbindung erfolgt dabei vorzugsweise um den Lappen umlaufend.

Alternativ oder zusätzlich ist es bevorzugt, dass auf einer Lage des Luftsackmaterials des Frontabschnitts ein Teil einer Schlaufe oder Tasche befestigt ist, der zusammen mit der Lage des Luftsackmaterials des Frontabschnitts die Befestigungsöffnung bildet. Der Schlaufen- oder Taschenteil kann dabei grundsätzlich aus einem beliebigen festen oder flexiblen Material gefertigt sein, vorzugsweise wird jedoch das Material verwendet, aus dem der Luftsack gefertigt ist. Der Schlaufenteil ist dabei vorzugsweise an zwei Enden mit einer Lage des Luftsackmaterials verbunden. Die Verbindung kann jeweils durch Vernähen, Verschweißen oder Verkleben erfolgen. Solche Schlaufen oder Taschen erlauben es, besonders einfach die Zunge in die durch den Schlaufenteil und die Lage des Luftsackmaterials des Frontabschnitts gebildete Befestigungsöffnung zu führen. Besonders bevorzugt bildet ein Taschenteil mehrere Taschen. Das Taschenteil kann dann beispielsweise durch einen auf eine Lage des Frontabschnitts aufgenähten Lappen gegeben sein, wobei die umlaufende Befestigungsnaht zur Bildung der Taschen- bzw. Befestigungsöffnungen unterbrochen ist. Bei der Herstellung des Luftsacks braucht dann nur der Lappen gehandhabt zu werden, nicht aber mehrere Schlaufen- oder Taschenteile.

Weiter ist es bevorzugt, dass ein Lappen, eine Schlaufe oder eine Lasche, in dem bzw. der die Befestigungsöffnung ausgebildet ist, mit einer Lage des Luftsackmaterials des Frontabschnitts verbunden ist. Die Lasche kann aus einem festen oder flexiblen Material gefertigt sein, während der Lappen vorzugsweise aus dem gleichen Material wie der Luftsack hergestellt ist. Insbesondere kann der Lappen bzw. die Lasche beispielsweise streifenartig ausgebildet sein, wobei ein Ende mit dem Frontabschnitt verbunden, beispielsweise vernäht, verklebt und/oder verschweißt ist, und das andere Ende die Befestigungsöffnung aufweist. Die Befestigungsöffnung kann insbesondere als Öse oder nach Art eines Knopflochs ausgeführt sein. Unter der Schlaufe wird insbesondere auch eine bandartiges Materialstück verstanden, dessen beiden Enden gemeinsam unter Ausbildung der Schlaufe an der im Wesentlichen selben Stelle mit der Lage des Luftsacks verbunden sind. Es ist jedoch auch denkbar, eine Schlinge an der Lage des Frontabschnitts zu befestigen.

Grundsätzlich können die Größe und auch die Form der Befestigungsöffnung beliebig gewählt sein, solange sie ein Einführen der Zunge erlaubt. Es ist jedoch bevorzugt, dass die Form und Größe der Befestigungsöffnung im Wesentlichen dem Querschnitt eines in der Befestigungsöffnung angeordneten Abschnitts der Zunge in dem um den Rand umgebogenen Zustand entsprechen. Auf diese Weise wird zum einen eine sehr gute Befestigung des Frontabschnitts erreicht, da ein mögliches Spiel zwischen dem Rand der Befestigungsöffnung und der Zunge weitgehend vermieden wird. Zum anderen wird so die Dichtigkeit des Luftsacks im Bereich der Befestigungsöffnung erhöht, wenn die Befestigungsöffnung in den Frontabschnitt des Luftsacks als Durchgangsöffnung ausgebildet ist.

Der Luftsack des erfindungsgemäßen Luftsackmoduls kann bis auf die Befestigungsöffnung bzw. die Mittel zur Bereitstellung derselben im Wesentlichen wie ein konventioneller Luftsack ausgebildet sein. Es ist jedoch bevorzugt, dass in dem Luftsack im Bereich der Befestigungsöffnung eine weitere Öffnung ausgebildet ist, durch die ein Endabschnitt des Luftsackhalters führbar ist. Auf diese Weise kann der Luftsackhalter auch zur Befestigung eines Emblems herangezogen werden, da der Endabschnitt dann aus dem Luftsack herausragt.

Grundsätzlich genügt es, dass nur eine Zunge an dem Luftsackhalter vorgesehen ist. Die Zunge kann dann den Frontabschnitt entweder allein oder auch in Verbindung mit einem geeignet an dem Luftsackhalter ausgebildeten Vorsprung, über den der Frontabschnitt mit einer zweiten Befestigungsöffnung gestülpt wird, halten. Es ist jedoch bevorzugt, dass an dem Luftsackhalter wenigstens zwei Zungen radial zu einer Längsachse des Luftsackmoduls angeordnet sind und der Frontabschnitt wenigstens zwei entsprechende Befestigungsöffnungen aufweist, und dass die Zungen radial nach innen auf die Längsachse zu um den Rand der Befestigungsöffnungen biegbar sind. Die Längsachse kann dabei insbesondere in der Hauptentfaltungsrichtung des Luftsacks erstrecken. Durch die Verwendung von zwei Zungen kann zum einen eine einfache Montage erreicht werden, bei der der Luftsack nur über die Zungen geschoben zu werden braucht, bevor diese umgebogen werden. Zum anderen ergibt sich beim Aufblasen des Luftsacks eine günstigere Verteilung der auf die Zungen wirkenden Kräfte. Weiterhin wird leichter ein einseitiges Abziehen des Luftsacks bzw. des Frontabschnitts von dem Luftsackhalter verhindert. Dadurch, dass die Zungen radial nach innen auf die Längsachse zu gebogen werden, kann weiterhin weitgehend verhindert werden, dass diese zufällig bei der Montage nochmals aufgebogen werden.

Um bei platzsparender Bauform ein gutes Einleiten von Gas in den Luftsack zu ermöglichen, ist es bevorzugt, dass die Zunge von einem Grundkörper des Luftsackmoduls beabstandet angeordnet ist, an dem der Luftsack mit dem Luftsackmund anliegt.

Weiterhin ist es bevorzugt, dass der Luftsackhalter aus einem gestanzten, verformten Blech gebildet ist. Dabei kann insbesondere die Zunge aus dem Blech ausgestanzt sein, das nachfolgend in die entsprechende Endform gebracht wird. Diese Ausbildung des Luftsackhalters ermöglicht eine besonders einfache Fertigung.

Um eine möglichst große Stabilität zu erreichen, ist es bevorzugt, dass der Luftsackhalter napfartig geformt ist. Ein Endabschnitt des Luftsackhalters ist vorzugsweise wenigstens teilweise plattenartig geformt und entspricht dann einem Boden eines Napfes. Er ist vorzugsweise in der Hauptentfaltungsrichtung des Luftsackhalters, d.h. von einem Grundkörper des Luftsackmoduls, beabstandet angeordnet. Insbesondere kann die Zunge dann im Bereich des Endabschnitts bzw. Napfbodens angeordnet sein, so dass der Frontabschnitt des Luftsacks im Bereich des Endabschnitts gehalten werden kann. Der Endabschnitt kann weiterhin zur Befestigung eines Emblems dienen und hierzu wenigstens eine Halteöffnungen aufweisen, in der das Emblem lösbar befestigbar bzw. in die das Emblem einschnappbar ist.

Um eine möglichst platzsparende Bauweise des erfindungsgemäßen Luftsackmoduls zu erzielen, ist es bevorzugt, dass der Luftsackhalter wenigstens teilweise durch eine Gasführungseinrichtung gebildet ist, durch die Gas eines Gasgenerators des Luftsackmoduls in den Luftsack führbar ist. Diese Gasführungseinrichtung wird häufig auch als "Diffusor" bezeichnet. Auf diese Weise kann Gas des Gasgenerators zwischen den Befestigungen des Luftsacks zum einen in dem Frontabschnitt und zum anderen im Bereich des Luftsackmundes in den Luftsack geleitet werden, so dass sich ein sehr vorteilhaftes Entfaltungsverhalten ergibt.

Für eine besonders einfache Fertigung ist es bevorzugt, dass die Zunge in einer Wand der Gasführungseinrichtung so gestanzt ist, dass wenigstens die um den Rand der Befestigungsöffnung umgebogene Zunge eine Gasdurchtrittsöffnung freigibt, durch die Gas in den Luftsack führbar ist.

Grundsätzlich kann der Luftsack im Bereich des Luftsackmundes in beliebiger Weise an dem Luftsackmodul befestigt sein. Insbesondere können im Bereich des Luftsackmundes entsprechende weitere Befestigungsöffnungen vorgesehen sein, durch die beispielsweise entsprechende Schrauben oder Gewindestifte zur Befestigung führbar sind. Dabei ist es bevorzugt, dass der Luftsackhalter mit einem Grundkörper des Luftsackmoduls verbunden ist, und ein Abschnitt des Luftsacks zwischen dem Luftsackhalter und dem Grundkörper angeordnet ist. Insbesondere kann der Luftsackhalter einen umlaufenden Befestigungsflansch aufweisen, zwischen dem und dem Grundkörper der Luftsack mit dem Randbereich um den Luftsackmund gehalten ist.

Es ist jedoch besonders bevorzugt, dass an dem Luftsackhalter und/oder einem den Luftsackhalter tragenden Grundkörper des Luftsackmoduls wenigstens eine weitere Zunge ausgebildet ist, und dass der Luftsack durch die um einen Rand einer Öffnung, die der Luftsack aufweist, umgebogene Zunge im Bereich des Luftsackmundes an dem Luftsackhalter bzw. Grundkörper wenigstens teilweise gehalten ist. Die Öffnung kann in den für die Befestigung des Frontabschnitts geschilderten Formen bereitgestellt sein. Besonders bevorzugt ist der Luftsack dann ausschließlich mittels Zungen befestigt. Insgesamt ergibt sich so eine besonders einfache Befestigung ohne jegliche weitere Zusatzteile, die darüber hinaus auch keine besonderen Werkzeuge wie Schraubendreher oder ähnliches erfordert.

Das erfindungsgemäße Luftsackmodul wird vorzugsweise an einem Pralltopf eines Lenkrades befestigt, um als Fahrerairbag zu dienen.

Die Erfindung wird nun weiter beispielhaft anhand der Zeichnungen erläutert. Es zeigen:
- Fig. 1: eine schematische Schnittansicht eines Luftsackmoduls nach einer ersten bevorzugten Ausführungsform der Erfindung, bei dem der Luftsack - angedeutet durch durchgezogene Linien - teilweise entfaltet und - gekennzeichnet durch gestrichelte Linien - vollständig entfaltet gezeigt ist,
- Fig. 2: eine perspektivische Ansicht einer einen Luftsackhalter bildenden Gasführungseinrichtung des Luftsackmoduls in Fig. 1,
- Fig. 3: eine Draufsicht auf einen Befestigungsbereich eines Frontabschnitts bzw. einer Scheibe des Luftsacks des Luftsackmoduls in Fig. 1,
- Fig. 4: eine perspektivische Ansicht der Anordnung von Zungen der Gasführungseinrichtung relativ zu dem Befestigungsbereich bzw. der Scheibe des Luftsacks,
- Fig. 5: eine perspektivische, teilweise geschnittene Ansicht des an dem Luftsackhalter bzw. der Gasführungseinrichtung gehaltenen Luftsacks,
- Fig. 6A und 6B: perspektivische Ansichten eines Luftsackhalters eines Luftsackmoduls nach einer zweiten bevorzugten Ausführungsform der Erfindung von schräg oben bzw. schräg unten mit teilweise umgebogenen Zungen,
- Fig. 7A und 7B: die gleichen perspektivischen Ansichten wie in den Fig. 6A bzw. 6B nun jedoch mit umgebogenen Zungen,

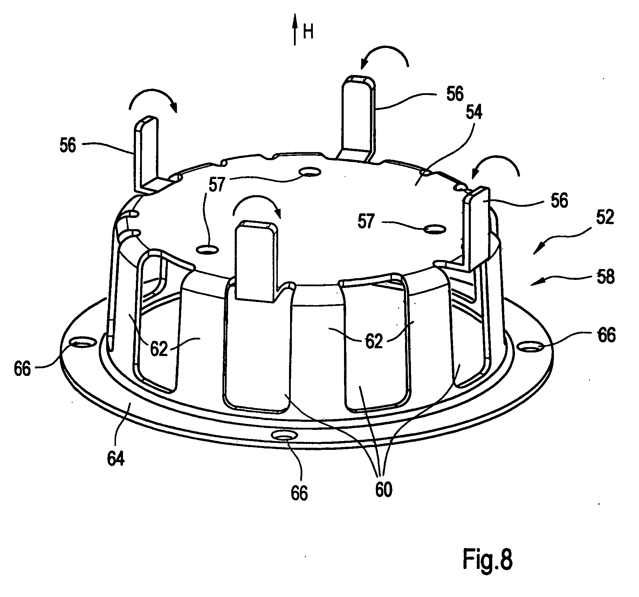

- Fig. 8: eine perspektivische Ansicht eines Luftsackhalters eines Luftsackmoduls nach einer dritten bevorzugten Ausführungsform der Erfindung, bei dem die Zungen noch nicht umgebogen sind,
- Fig. 9: eine teilweise perspektivische Ansicht eines Frontabschnitts eines Luftsacks eines Luftsackmoduls nach einer vierten bevorzugten Ausführungsform der Erfindung,
- Fig. 10: eine teilweise perspektivische Ansicht eines Frontabschnitts eines Luftsacks eines Luftsackmoduls nach einer fünften bevorzugten Ausführungsform der Erfindung, und
- Fig. 11: eine teilweise perspektivische Ansicht eines Frontabschnitts eines Luftsacks eines Luftsackmoduls nach einer sechsten bevorzugten Ausführungsform der Erfindung.

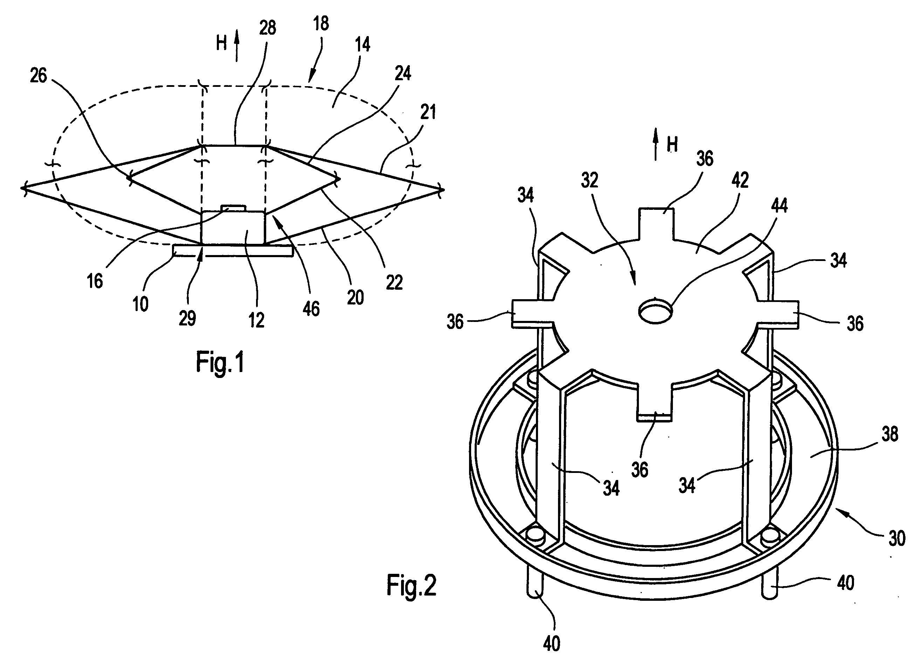

Ein Luftsackmodul nach einer ersten bevorzugten Ausführungsform der Erfindung umfasst einen Grundkörper 10, der der Befestigung des Luftsackmoduls dient, einen gewöhnlichen Gasgenerator, eine spezielle, napfförmige, im Folgenden auch als Diffusor bezeichnete Gasführungseinrichtung 12, die fest mit dem Luftsackmodul verbunden ist und in Fig. 1 zusammen mit dem Gasgenerator dargestellt ist, einen bei Aufblasen ein ringartig geformtes Kissen bildender Luftsack 14, sowie eine in den Figuren nicht gezeigte Modulabdeckung. Auf dem Luftsackmodul ist ein Emblem 16 befestigt.

Der in Fig. 1 gezeigte Luftsack 14 besteht aus einem Frontabschnitt 18 und einem rückwärtigen Abschnitt 20. Der Frontabschnitt 18 umfasst eine Stirnscheibe 21, die in ihrer Mitte eine Zentralöffnung 28 aufweist, und zwei kleinere Scheiben 22 und 24 aus Luftsackmaterial, die an einem äußeren Umfang 26 miteinander vernäht sind. Die untere Scheibe 22 ist an dem Luftsackmodul befestigt, während die obere Scheibe 24 entlang des Randes der Zentralöffnung 28 mit dem Frontabschnitt 18 des Luftsacks 12 vernäht ist.

Der rückwärtige Abschnitt 20 ist ringartig geformt und weist um eine einen Luftsackmund 29 bildende Öffnung herum in den Figuren nicht gezeigte Halteöffnungen auf.

Bei Aufblasen des Luftsacks 14 mit Gas aus dem Gasgenerator und Entfaltung in einer Hauptentfaltungsrichtung H ergibt sich das in Fig. 1 durch gestrichelte Linien dargestellte ringartig geformte Luftsackkissen, das in seiner Mitte eine bis zu dem Emblem 16 reichende Vertiefung bzw. ein entsprechendes Loch aufweist. Der Frontabschnitt 18 des Luftsacks besteht daher aus einem bei einer Entfaltung des Luftsacks als Auffangfläche für einen Fahrzeuginsassen vorgesehenen Bereich sowie einem von diesem wenigstens teilweise umschlossenen, durch Teile der Scheiben 22 und 24 gebildeten Mittelbereich. Bis auf den umschlossenen Mittelbereich ist der Frontabschnitt 16 somit dem Fahrzeuginnenraum zu- und damit von dem Grundkörper 10 des Luftsackmoduls abgewandt. Der rückwärtigen Abschnitt 20 ist entgegen der Hauptentfaltungsrichtung des Luftsacks orientiert.

Die vorliegende Erfindung bezieht sich u.a. auf die spezielle Ausführung des in Fig. 2 mit dem Bezugszeichen 30 gezeigten, napfförmigen Diffusors, der zur Befestigung des ringförmigen Luftsackkissens bzw. Luftsacks 14 dient und somit einen Luftsackhalter im Sinne der Erfindung darstellt.

Der napfförmige Diffusor 30 ist vorzugsweise aus Blech gefertigt und umfasst mehrere Teile: ein Stanzteil 32 mit seitlichen Wänden bzw. Bügeln 34 sowie Zungen 36, einem kreis- bzw. ringförmigen Teil 38 und Schrauben 40.

Das Stanzteil 32 weist in einem einem Napfboden entsprechenden plattenförmigen Endabschnitt 42 ein Loch 44 zur Befestigung des Emblems 16 auf.

Wie in Fig. 2 gezeigt, sind die im Beispiel vier Bügel 34 so geformt, dass zusammen mit dem Endabschnitt 42 eine napfartige Form entsteht.

Der ringförmige Teil 38 ist fest mit den Bügeln 34 verbunden.

Die an dem ringförmigen Teil 38 gehaltenen Schrauben 40 dienen zur Befestigung des rückwärtigen Abschnitts 20 des Luftsacks 14, indem sie durch die entsprechenden Halteöffnungen geführt werden. Gleichzeitig dienen die Schrauben 40 zur Befestigung des Gasgenerators bzw. des Diffusors 30 an dem Luftsackmodul bzw. dessen Grundkörper 10. Der Luftsack 14 liegt dann im Bereich des Luftsackmundes 29 an dem Grundkörper 10 an und ist zwischen diesem und dem ringförmigen Teil 38 eingeklemmt.

Die mit einem flachen Querschnitt ausgebildeten, im Beispiel vier, Blechzungen 36 an dem oberen, von dem Grundkörper 10 abgewandten plattenförmigen Endabschnitt 42 des napfförmigen Diffusors 30 stehen im ungebogenen Zustand radial nach außen, gegebenenfalls in einer Richtung von dem Grundkörper 10 weg, ab. Sie sind um eine Längsachse des Diffusors 30 in gleichen Winkelabständen zueinander angeordnet.

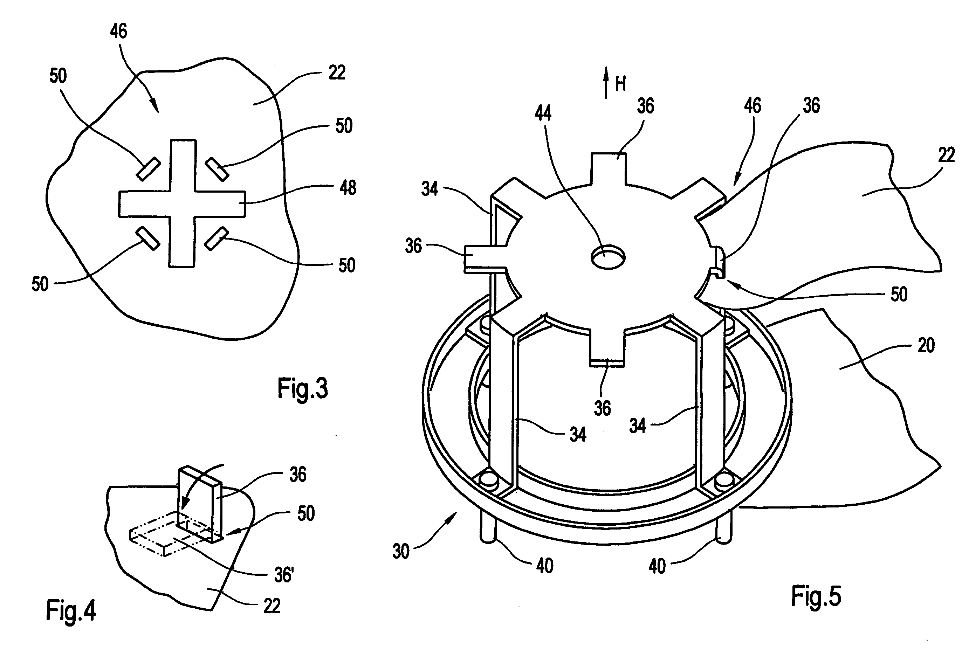

Die Blechzungen 36 werden zur Befestigung der unteren Scheibe 22 des Kissens bzw. Luftsacks 14 und damit des Frontabschnitts verwendet. Das Kissen bzw. der Luftsack 14 wird hierzu über den Zungen 36 positioniert. Ein mittlerer Befestigungsbereich 46 der unteren Scheibe 22 und damit des Frontabschnitts 18 des Luftsacks 14 weist hierzu ein entsprechend in diesen eingeschnittenes Muster auf. Um das Kissen bzw. den Luftsack 14 zwischen die Bügel 34 bringen zu können, ist, wie in Fig. 3 gezeigt, in den mittleren Befestigungsbereich 46 bzw. den Luftsack 14 eine Einführöffnung 48 geschnitten, die in diesem Ausführungsbeispiel entsprechend der Anzahl und Anordnung der Bügel 34 kreuzförmig ausgebildet ist. Zur Aufnahme der Zungen 36 sind in dem mittleren Befestigungsbereich 46 weiterhin entsprechend der Anzahl, der Lage und des Querschnitts der Zungen 36 Befestigungsöffnungen 50 ausgeschnitten, im Beispiel vier in gleichen Winkelabständen voneinander tangential zu einem Kreis um den Mittelpunkt des mittleren Befestigungsbereichs 46 angeordnete Schlitze, deren Länge und Breite dem Querschnitt der Zungen 36 entspricht.

Die Zungen 36 werden durch die in den mittleren Befestigungsbereich 46 der unteren Scheibe 22 gebildete Befestigungsöffnungen 50 geführt und umgebogen, um den Frontabschnitt 18 und damit wenigstens teilweise das Kissen bzw. den Luftsack 14 zu befestigen. In Fig. 4 ist eine in einer Befestigungsöffnung 50 umgebogene Zunge 36' gezeigt.

Fig. 5 zeigt teilweise den an dem Diffusor 30 gehaltenen Luftsack 14 bzw. das an dem Diffusor 30 gehaltene Kissen 14.

Bei Aufblasen des Luftsacks 14 mit Gas aus dem Gasgenerator ergibt sich ein ringartig geformtes Kissen, das zum einen im Bereich des Luftsackmundes 29 zwischen dem Grundkörper 10 und dem Luftsackhalter bzw. Diffusor 30 und zum anderen in dem mittleren Befestigungsbereich 46 mit dem Frontabschnitt 18 an dem Diffusor 30 als Luftsackhalter befestigt ist und in seiner Mitte eine Vertiefung aufweist.

In der Mitte befindet sich das Emblem 16, das bei der Entfaltung des Luftsacks 14 mit dem Diffusor 30 verbunden bleibt und so nicht in Kontakt mit einem Fahrzeuginsassen kommen kann.

Der in Fig. 2 gezeigte napfförmige Diffusor 30 ist nur eine von vielen möglichen Ausführungsformen. Die Anzahl der Bügel 34 und Zungen 36 hängt von der Form und Größe des Luftsackmoduls ab. Weiterhin hängt das in die untere Scheibe 22 geschnittene Muster von der Anordnung und Form der Bügel 34 und der Zungen 36 des Diffusors 30 ab.

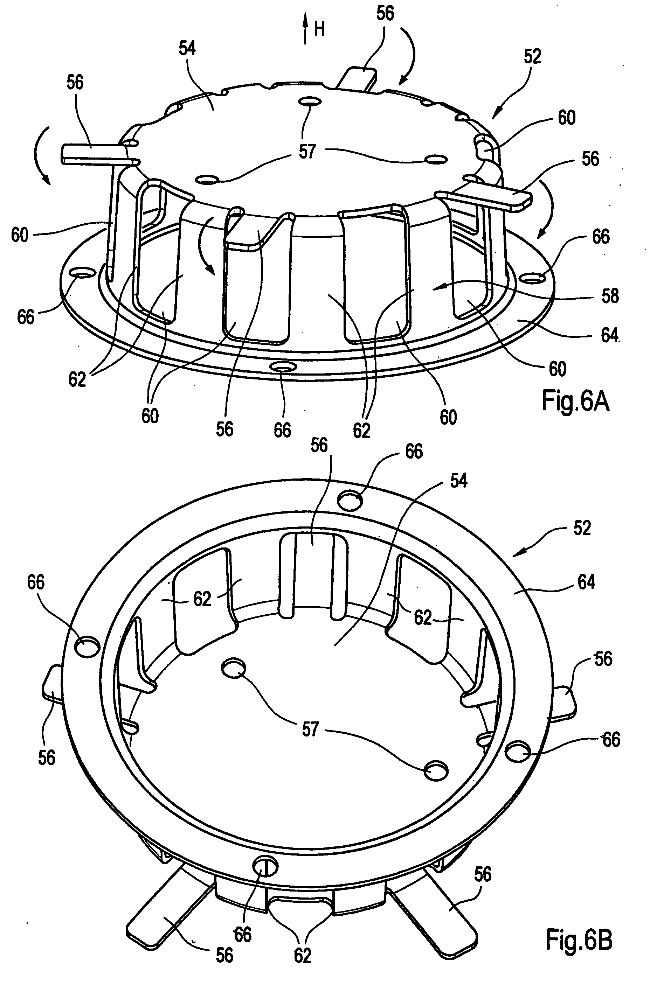

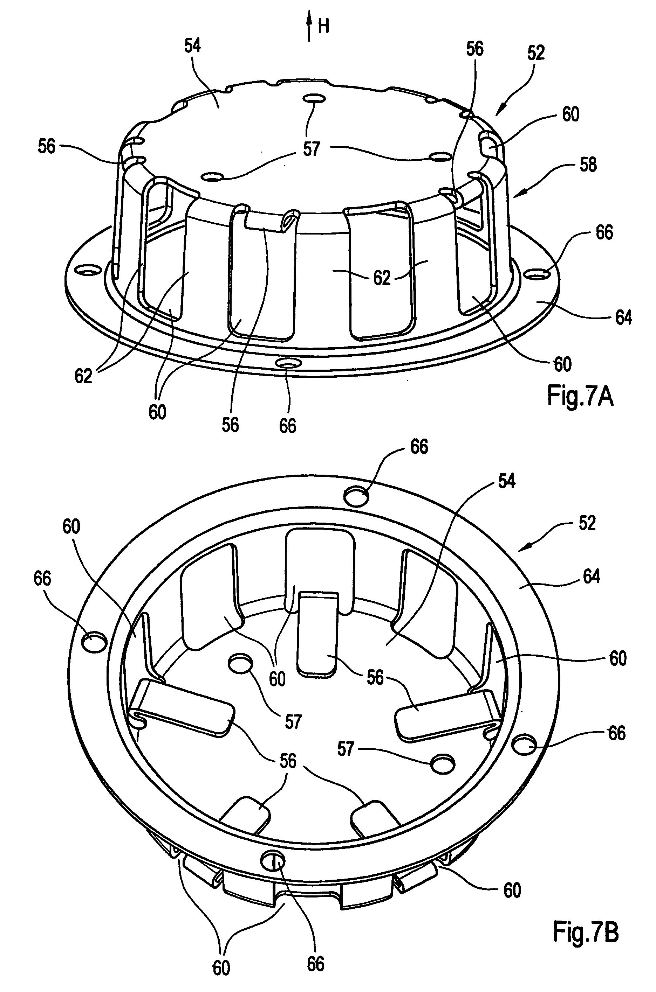

In den Fig. 6A und 6B bzw. 7A und 7B ist ein eine Gasführungseinrichtung bzw. einen Diffusor bildender Luftsackhalter 52 eines Luftsackmoduls nach einer zweiten bevorzugten Ausführungsform der Erfindung gezeigt. Die anderen Komponenten des Luftsackmoduls sind im Wesentlichen unverändert, so dass für diese die gleichen Bezugszeichen wie in dem vorhergehenden Ausführungsbeispiel verwendet werden und die gleichen Erläuterungen gelten.

Der napfförmige Diffusor 52 ist nun einstückig aus einem Blechteil geformt. An einem plattenförmigen Endabschnitt 54 des Diffusors 52 sind vier umbiegbare Zungen 56 mit flachem Querschnitt ausgebildet, die im nicht umgebogenen Zustand radial abstehen. Weiterhin sind in dem Endabschnitt 54 Löcher 57 zur Befestigung eines Emblems vorgesehen.

Eine Umfangswand 58 des Diffusors 52 weist zwölf Gasdurchtrittsöffnungen 60 auf, die aus einem entsprechenden Blech ausgestanzt wurden, wobei die vier Zungen 56 durch die entsprechenden Gasdurchtrittsöffnungen 60 radial nach innen biegbar sind und diese dann einen Gasdurchtritt freigeben. Auf diese Weise entstehen auch zwölf Bügel 62, die den Bügeln 34 in dem vorgehenden Ausführungsbeispiel entsprechen.

Die Umfangswand 58 des Diffusors 52 geht in einen Befestigungsflansch 64 über, der dem kreisförmigen Teil 38 in dem vorhergehenden Ausführungsbeispiel entspricht und der vier Befestigungslöcher 66 für Schrauben aufweist, mittels derer der Diffusor 52 an dem Luftsackmodul bzw. einem entsprechenden, in den Figuren nicht gezeigten Grundkörper befestigbar ist. Die Öffnung in dem Befestigungsbereich des Luftsacks, die der Öffnung 36 in dem vorhergehenden Ausführungsbeispiel entspricht, ist entsprechend der etwas modifizierten Form des Diffusors 52 im vorliegenden Ausführungsbeispiel verändert.

Der Luftsack 14 wird grundsätzlich in gleicher Weise an dem Diffusor 52 befestigt wie in dem vorhergehenden Ausführungsbeispiel. Durch eine Relativbewegung zwischen dem mittleren Befestigungsbereich mit den Befestigungsöffnungen und dem Luftsackhalter bzw. Diffusor 52 werden die Zungen 56 in die Befestigungsöffnungen geführt und dann jeweils um einen Rand der Befestigungsöffnung gebogen. Dabei wird durch eine Relativbewegung zwischen dem Luftsack und dem Luftsackhalter bzw. Diffusor 52 der Luftsackhalter 52 wenigstens teilweise in den Luftsack eingeführt.

Bei einem Luftsackmodul nach einer dritten bevorzugten Ausführungsform der Erfindung braucht der Luftsack keine Einführöffnung 48 aufzuweisen. Ansonsten ist das Luftsackmodul wie das Luftsackmodul in dem zweiten Ausführungsbeispiel ausgebildet. Zur Befestigung sind nun die Zungen 56 hochgebogen, so dass der Befestigungsbereich des Luftsacks mit den Befestigungsöffnungen 50 entsprechenden Befestigungsöffnungen über die Zungen 56 gestülpt werden kann, woraufhin diese nun nicht radial in den Diffusor 52 hineingebogen werden, sondern auch radial nach innen aber außen auf den Endabschnitt 54 des Diffusors 52 gebogen werden. Auf diese Weise kann die weitere Öffnung in dem Luftsack vermieden und damit die Dichtigkeit der Anordnung beim Aufblasen des Luftsacks erhöht werden.

Ein Luftsackmodul nach einer vierten bevorzugten Ausführungsform der Erfindung unterscheidet sich von dem Luftsackmodul des dritten Ausführungsbeispiels durch die Ausbildung des Luftsacks 68 in dem Frontabschnitt. Alle anderen Teile sind unverändert.

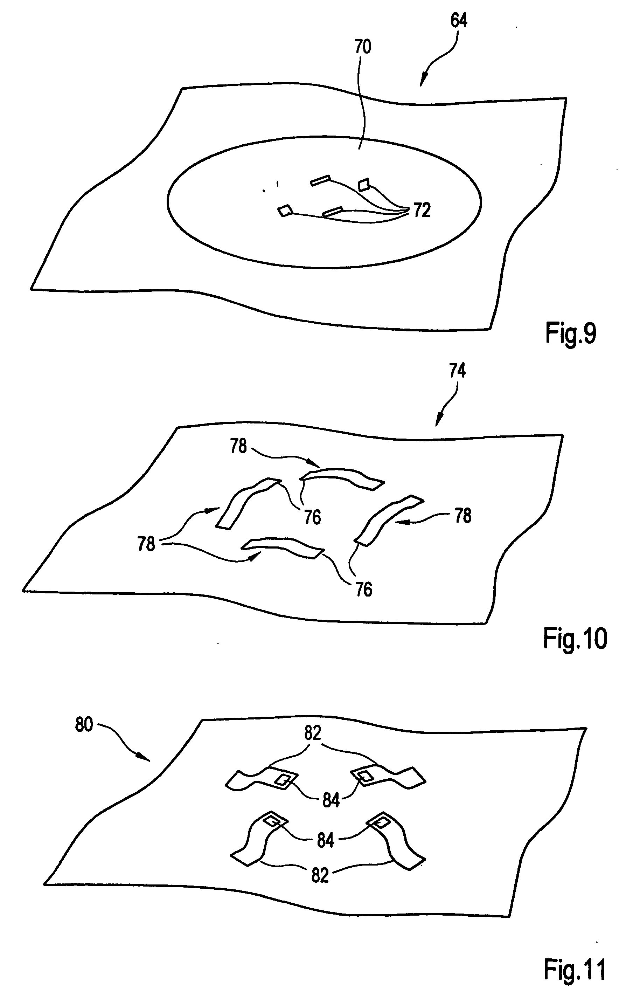

Der Frontbereich des Luftsacks 68 (vgl. Fig. 9) ist nun zweilagig ausgeführt, wozu auf die Innenseite eines der unteren Scheibe 22 des Luftsacks im ersten bzw. zweiten Ausführungsbeispiel entsprechenden nicht durchbrochenen Luftsackmaterialabschnitts ein im Beispiel kreisförmiger Haltelappen 70 aus Luftsackmaterial genäht ist, in dem Befestigungsöffnungen 72 ausgebildet sind, die in Form und Lage denen des zweiten Ausführungsbeispiels entsprechen.

Der Luftsack 68 weist daher in dem Frontabschnitt keine vollständig, d.h. durch beide Lagen hindurchgehenden, Öffnungen auf, so dass der Luftsack 68 in diesem Bereich unabhängig von der Befestigung dicht ist. Die Befestigung selbst erfolgt im Wesentlichen wie im vorhergehenden Ausführungsbeispiel.

Ein Luftsackmodul nach einer fünften bevorzugten Ausführungsform der Erfindung unterscheidet sich von dem Luftsackmodul des dritten Ausführungsbeispiels durch die Ausbildung des Luftsacks 74 in dem Frontabschnitt. Alle anderen Teile sind unverändert.

Auf den Frontbereich des Luftsacks 74 (vgl. Fig. 10) sind im Beispiel vier band- bzw. streifenförmige Schlaufenteile 76, im Beispiel aus Luftsackmaterial, mit ihren beiden Enden auf eine des Luftsackmaterials aufgenäht, die mit der Lage jeweils eine Befestigungsöffnung 78 bilden. Auch hier ist der Frontabschnitt des Luftsacks 74 in dem Frontabschnitt nicht durchbrochen, so dass der Luftsack 74 in diesem Bereich unabhängig von der Befestigung dicht ist. Die Befestigung erfolgt im Wesentlichen wie im dritten Ausführungsbeispiel.

Ein Luftsackmodul nach einer sechsten bevorzugten Ausführungsform der Erfindung unterscheidet sich von dem Luftsackmodul des dritten Ausführungsbeispiels durch die Ausbildung des Luftsacks 80 in dem Frontabschnitt. Alle anderen Teile sind unverändert.

Der Frontabschnitt des Luftsacks 80 (vgl. Fig. 11) weist nun auf einer Lage ohne Öffnungen mehrere, im Beispiel vier, aufgenähte Laschen bzw. streifenförmige Lappen 82 auf, in deren freien Enden jeweils eine Befestigungsöffnung 84 für die Zungen 56 ausgebildet ist. Die freien Enden der Laschen 82 sind kurz, im Beispiel etwa 2 cm, um eine weite Bewegung des Frontabschnitts beim Entfalten des Luftsacks zu vermeiden. Sie können aber in anderen Ausführungsbeispielen je nach Lage der Zungen auch länger sein.

Auch hier ist die Lage des Luftsackmaterials des Frontabschnitts des Luftsacks 80 nicht durchbrochen, so dass der Luftsack 80 in diesem Bereich unabhängig von der Befestigung dicht ist. Die Befestigung erfolgt im Wesentlichen wie im dritten Ausführungsbeispiel.

### Bezugszeichenliste

- 10: Grundkörper
- 12: Gasführungseinrichtung mit Gasgenerator
- 14: Luftsack
- 16: Emblem
- 18: Frontabschnitt
- 20: rückwärtiger Abschnitt
- 21: Stirnscheibe
- 22: untere Scheibe
- 24: obere Scheibe
- 26: Naht
- 28: Zentralöffnung
- 29: Luftsackmund
- 30: Diffusor
- 32: Stanzteil
- 34: Bügel
- 36, 36': Zungen
- 38: ringförmiges Teil
- 40: Schrauben
- 42: Endabschnitt
- 44: Loch
- 46: mittlerer Befestigungsbereich
- 48: Einführöffnung
- 50: Befestigungsöffnungen
- 52: Diffusor
- 54: Endabschnitt
- 56: Zungen
- 57: Löcher
- 58: Umfangswand
- 60: Gasdurchtrittsöffnungen
- 62: Bügel
- 64: Befestigungsflansch
- 66: Befestigungslöcher
- 68: Luftsack
- 70: Haltelappen
- 72: Befestigungsöffnungen
- 74: Luftsack
- 76: Schlaufenteile
- 78: Befestigungsöffnungen
- 80: Luftsack
- 82: Laschen
- 84: Befestigungsöffnung

- H: Hauptentfaltungsrichtung

## Patentansprüche

1. Luftsackmodul mit
einem Luftsack (14; 68; 74; 80), der einen Luftsackmund (29) und einen Frontabschnitt (18) mit wenigstens einer Befestigungsöffnung (50; 72; 78; 84) aufweist, und
einem wenigstens teilweise in dem Luftsack (14; 68; 74; 80) angeordneten Luftsackhalter (30; 52), **dadurch gekennzeichnet, dass** der Luftsackhalter (30; 52) wenigstens eine umbiegbare Zunge (36, 36'; 56) aufweist, die zur Befestigung des Frontabschnitts (18) durch die Befestigungsöffnung (50; 72; 78; 84) führbar und dann um einen Rand der Befestigungsöffnung (50; 72; 78; 84) biegbar ist.

2. Luftsackmodul nach Anspruch 1,
**dadurch gekennzeichnet,**
**dass** die Befestigungsöffnung (50) als Durchgangsöffnung in dem Frontabschnitt (18) ausgebildet ist.

3. Luftsackmodul nach Anspruch 1 oder 2,
**dadurch gekennzeichnet,**
**dass** der Luftsack (68) in dem Frontabschnitt (18) wenigstens teilweise zweilagig ist, und
**dass** die Befestigungsöffnung (72) in der inneren Lage (70) des Luftsacks ausgebildet ist.

4. Luftsackmodul nach einem der vorhergehenden Ansprüche,
**dadurch gekennzeichnet,**
**dass** auf einer Lage des Luftsackmaterials des Frontabschnitts (18) ein Teil einer Schlaufe (76) oder Tasche befestigt ist, der zusammen mit der Lage des Luftsackmaterials die Befestigungsöffnung bildet.

5. Luftsackmodul nach einem der vorhergehenden Ansprüche,
**dadurch gekennzeichnet,**
**dass** ein Lappen, eine Schlaufe oder eine Lasche (82), in dem bzw. der die Befestigungsöffnung (84) ausgebildet ist, mit einer Lage des Luftsackmaterials des Frontabschnitts (18) verbunden ist.

6. Luftsackmodul nach einem der vorhergehenden Ansprüche,
**dadurch gekennzeichnet,**
**dass** die Form und Größe der Befestigungsöffnung (50; 72; 78; 84) im Wesentlichen dem Querschnitt eines in der Befestigungsöffnung (50; 72; 78; 84) angeordneten Abschnitts der Zunge (36, 36'; 56) in dem um den Rand umgebogenen Zustand entsprechen.

7. Luftsackmodul nach einem der vorhergehenden Ansprüche,
**dadurch gekennzeichnet,**
**dass** in dem Luftsack (14; 68; 74; 80) im Bereich der Befestigungsöffnung (50; 72; 78; 84) eine weitere Öffnung (48) ausgebildet ist, durch die ein Endabschnitt (42; 54) des Luftsackhalters (30; 52) führbar ist.

8. Luftsackmodul nach einem der vorhergehenden Ansprüche,
**dadurch gekennzeichnet,**
**dass** an dem Luftsackhalter (30; 52) wenigstens zwei Zungen (36, 36'; 56) radial zu einer Längsachse (H) des Luftsackmoduls angeordnet sind,
**dass** der Frontabschnitt (18) des Luftsacks (14; 68; 74; 80) wenigstens zwei entsprechende Befestigungsöffnungen (50; 72; 78; 84) aufweist, und dass die Zungen (36, 36'; 56) radial nach innen auf die Längsachse zu um den Rand der Befestigungsöffnungen (50; 72; 78; 84) biegbar sind.

9. Luftsackmodul nach einem der vorhergehenden Ansprüche,
**dadurch gekennzeichnet,**
**dass** die Zunge (36, 36'; 56) von einem Grundkörper (10) des Luftsackmoduls beabstandet angeordnet ist, an dem der Luftsack (14; 68; 74; 80) mit dem Luftsackmund (29) anliegt.

10. Luftsackmodul nach einem der vorhergehenden Ansprüche,
dass der Luftsackhalter (30; 52) aus einem gestanzten, verformten Blech gebildet ist.

11. Luftsackmodul nach einem der vorhergehenden Ansprüche,
**dadurch gekennzeichnet,**
**dass** der Luftsackhalter (30; 52) napfartig geformt ist.

12. Luftsackmodul nach einem der vorhergehenden Ansprüche,
**dadurch gekennzeichnet,**
**dass** der Luftsackhalter (30; 52) wenigstens teilweise durch eine Gasführungseinrichtung (30; 52) gebildet ist, durch die Gas eines Gasgenerators (12) des Luftsackmoduls in den Luftsack (14; 68; 74; 80) führbar ist.

13. Luftsackmodul nach Anspruch 12,
**dadurch gekennzeichnet,**
**dass** die Zunge (36, 36'; 56) in einer Wand (58) der Gasführungseinrichtung (30; 52) so gestanzt ist, dass wenigstens die um den Rand der Befestigungsöffnung (50; 72; 78; 84) umgebogenen Zunge (36, 36'; 56) eine Gasdurchtrittsöffnung (60) freigibt, durch die Gas in den Luftsack (14; 68; 74; 80) führbar ist.

14. Luftsackmodul nach einem der vorhergehenden Ansprüche,
**dadurch gekennzeichnet,**
**dass** der Luftsackhalter (30; 52) mit einem Grundkörper (10) des Luftsackmoduls verbunden ist, und ein Abschnitt des Luftsacks (14; 68; 74; 80) zwischen dem Luftsackhalter (30; 52) und dem Grundkörper (10) angeordnet ist.

15. Luftsackmodul nach einem der Ansprüche 1 bis 13,
**dadurch gekennzeichnet,**
**dass** an dem Luftsackhalter und/oder einem den Luftsackhalter tragenden Grundkörper des Luftsackmoduls wenigstens eine weitere Zunge ausgebildet ist, und
**dass** der Luftsack durch die um einen Rand einer Öffnung, die der Luftsack aufweist, umgebogene Zunge im Bereich des Luftsackmundes an dem Luftsackhalter bzw. Grundkörper wenigstens teilweise gehalten ist.

16. Verfahren zur Befestigung eines Luftsacks (14; 68; 74; 80), der einen Luftsackmund (29) und einen Frontabschnitt mit wenigstens einer Befestigungsöffnung (50; 72; 78; 84) aufweist, an einem Luftsackhalter (30; 52), **dadurch gekennzeichnet, dass** der Luftsackhalter (30; 52) wenigstens eine umbiegbare Zunge (36, 36'; 56) aufweist, und dass
durch eine Relativbewegung zwischen wenigstens einem Bereich des Luftsacks (14; 68; 74; 80) mit der Befestigungsöffnung (50; 72; 78; 84) und dem Luftsackhalter (30; 52) die Zunge (36, 36'; 56) in die Befestigungsöffnung (50; 72; 78; 84) geführt und dann um einen Rand der Befestigungsöffnung (50; 72; 78; 84) gebogen wird, und durch eine Relativbewegung zwischen wenigstens einem Bereich des Luftsacks (14; 68; 74; 80) mit der Befestigungsöffnung (50; 72; 78; 84) und dem Luftsackhalter (30; 52) der Luftsackhalter (30; 52) wenigstens teilweise in den Luftsack (14; 68; 74; 80) eingeführt wird.

## Claims

1. An airbag module comprising
an airbag (14; 68; 74; 80) which has an airbag mouth (29) and a front section (18) having at least one fastening opening (50; 72; 78; 84); and
an airbag holder (30; 52) arranged at least partly in the airbag (14; 68; 74; 80) **characterized in that** the airbag holder (30; 52) has at least one tongue (36, 36'; 56) which is capable of being bent over, which can be guided through the fastening opening (50; 72; 78; 84) for the fastening of the front section (18) and which can then be bent over a rim of the fastening opening (50; 72; 78; 84).

2. An airbag module in accordance with claim 1, **characterized in that** the fastening opening (50) is formed as a passage opening in the frontal section (18).

3. An airbag module in accordance with claim 1 or claim 2, **characterized in that** the airbag (68) is at least partly two-layered in the frontal section (18); and **in that** the fastening opening (72) is formed in the inner layer (70) of the airbag.

4. An airbag module in accordance with any one of the preceding claims, **characterized in that** a part of a loop (76) or of a pocket is fastened at a layer of the airbag material of the frontal section (18) and forms the fastening opening with the layer of the airbag material.

5. An airbag module in accordance with any one of the preceding claims, **characterized in that** a flap, a loop or a tab (82), in which the fastening opening (84) is formed, is connected to a layer of the airbag material of the frontal section (18).

6. An airbag module in accordance with any one of the preceding claims, **characterized in that** the shape and size of the fastening opening (50; 72; 78; 84) substantially correspond to the cross-section of a section of the tongue (36, 36'; 56) arranged in the fastening opening (50; 72; 78; 84) in the state bent over the rim.

7. An airbag module in accordance with any one of the preceding claims, **characterized in that** a further opening (48), through which an end section (42; 54) of the airbag holder (30; 52) can be guided, is formed in the airbag (14; 68; 74; 80) in the region of the fastening opening (50; 72; 78; 84).

8. An airbag module in accordance with any one of the preceding claims, **characterized**
**in that** at least two tongues (36, 36'; 56) are arranged at the airbag holder (30; 52) radially to a longitudinal axis (H) of the airbag module;
**in that** the frontal section (18) of the airbag (14; 68; 74; 80) has at least two corresponding fastening openings (50; 72; 78; 84); and
**in that** the tongues (36, 36'; 56) can be bent radially inwardly toward the longitudinal axis over the rim of the fastening openings (50; 72; 78; 84).

9. An airbag module in accordance with any one of the preceding claims, **characterized in that** the tongue (36, 36'; 56) is arranged spaced apart from a base body (10) of the airbag module which the airbag (14; 68; 74; 80) contacts at the airbag mouth (29).

10. An airbag module in accordance with any one of the preceding claims, **characterized in that** the airbag holder (30; 52) is formed from a punched, shaped metal sheet.

11. An airbag module in accordance with any one of the preceding claims, **characterized in that** the airbag holder (30; 52) is shaped in cup form.

12. An airbag module in accordance with any one of the preceding claims, **characterized in that** the airbag holder (30; 52) is formed at least partly by a gas guiding device (30; 52) through which gas of a gas generator (12) of the airbag module can be guided into the air bag (14; 68; 74; 80).

13. An airbag module in accordance with claim 12, **characterized in that** the tongue (36, 36'; 56) is punched in a wall (58) of the gas guiding device (30; 52) such that at least the tongue (36, 36', 56) bent over the rim of the fastening opening (50; 72; 78; 84) frees a gas passage opening (60) through which gas can be guided into the airbag (14; 68; 74; 80).

14. An airbag module in accordance with any one of the preceding claims, **characterized in that** the airbag holder (30; 52) is connected to a base body (10) of the airbag module and a section of the airbag (14; 68; 74; 80) is arranged between the airbag holder (30; 52) and the base body (10).

15. An airbag module in accordance with any of claims 1 to 13, **characterized**
**in that** at least one further tongue is formed at the airbag holder and/or at a base body of the airbag module supporting the airbag holder; and
**in that** the airbag is held at least partly in the region of the airbag mouth at the airbag holder or at the base body by the tongue bent over a rim of an opening which the airbag has.

16. A method for the fastening of an airbag (14; 68; 74; 80), which has an airbag mouth (29) and a frontal section with at least one fastening opening (50; 72; 78; 84), to an airbag holder (30; 52) with at least one tongue (36, 36'; 56) which is capable of being bent over, in which
the tongue (36, 36'; 56) is guided into the fastening opening (50; 72; 78; 84) by a relative movement between at least one region of the airbag (14; 68; 74; 80) with the fastening opening (50; 72; 78; 84) and the airbag holder (30; 52) and is then bent over a rim of the fastening opening (50; 72; 78; 84); and
the airbag holder (30; 52) is at least partly inserted into the airbag (14; 68; 74; 80) by a relative movement between at least one region of the airbag (14; 68; 74; 80) with the fastening opening (50; 72; 78; 84) and the airbag holder (30; 52).

## Revendications

1. Module d'airbag, comportant
un airbag (14;68;74;80), qui comporte une embouchure (29) et une section avant (18) comportant au moins une ouverture de fixation (50;72;78;84), et
un dispositif (30;52) de retenue de l'airbag disposé au moins en partie dans l'airbag (14;68;74;80),
**caractérisé en ce que** le dispositif (30;52) de retenue de l'airbag comporte au moins une languette (36;36';56) pouvant être repliée et qui peut être guidée, pour la fixation de la section avant (18), dans l'ouverture de fixation (50;72;78;84) et peut être ensuite repliée autour d'un bord de l'ouverture de fixation (50;72;78;84).

2. Module d'airbag selon la revendication 1, **caractérisé en ce que** l'ouverture de fixation (50) est agencée sous la forme d'une ouverture de passage dans la section avant (18).

3. Module d'airbag selon la revendication 1 ou 2,
**caractérisé en ce**
**que** l'airbag (68) est formé d'au moins deux couches dans la section avant (18), et
**que** l'ouverture de fixation (72) est formée dans la couche intérieure (70) de l'airbag.

4. Module d'airbag selon l'une des revendications précédentes, **caractérisé en ce**
**que** sur la couche du matériau de l'airbag de la section avant (18) de l'airbag est fixée une partie d'une boucle (76) ou d'une poche, qui forme, conjointement avec la couche du matériau de l'airbag, l'ouverture de fixation.

5. Module d'airbag selon l'une des revendications précédentes, **caractérisé en ce qu'**une languette, une boucle ou une patte (82) dans laquelle est formée l'ouverture de fixation (84) est reliée à la couche du matériau de la section avant (18) de l'airbag.

6. Module d'airbag selon l'une des revendications précédentes, **caractérisé en ce que** la forme et la taille de l'ouverture de fixation (50;72;78;84) correspondent essentiellement à la section transversale d'une section de la languette (36,36';56), qui est disposée dans l'ouverture de fixation (50;72;78;84) dans l'état replié autour du bord.

7. Module d'airbag selon l'une des revendications précédentes, **caractérisé en ce que** dans l'airbag (14;68;74;80) est formée, dans la zone de l'ouverture de fixation (50;72;78; 84), une autre ouverture (48), au moyen de laquelle peut être guidée une section d'extrémité (42;54) du dispositif (30;52) de retenue de l'airbag.

8. Module d'airbag selon l'une des revendications précédentes, **caractérisé en ce**
**que** sur le dispositif (30;52) de retenue de l'airbag au moins deux languettes (36;36';56) sont disposées radialement par rapport à un axe longitudinal (H) du module d'airbag, et
**que** la section avant (18) de l'airbag (14;68;74;80) comporte au moins deux ouvertures de fixation correspondantes (50;72;78;84) et que les languettes (36;36';56) peuvent être repliées radialement vers l'intérieur en direction de l'axe longitudinal autour du bord des ouvertures de fixation (50;72;78;84).

9. Module d'airbag selon l'une des revendications précédentes, **caractérisé en ce**
**que** la languette (36;36';56) est disposée à distance d'un corps de base (10) du module d'airbag, sur lequel l'airbag (14;68;74;80) s'applique par son embouchure (29).

10. Module d'airbag selon l'une des revendications précédentes, **caractérisé en ce que** le dispositif (30;52) de retenue de l'airbag est formé par une tôle découpée et déformée.

11. Module d'airbag selon l'une des revendications précédentes, **caractérisé en ce**
**que** le dispositif (30;52) de retenue de l'airbag est agencé en forme de godet.

12. Module d'airbag selon l'une des revendications précédentes, **caractérisé en ce**
**que** le dispositif (30;52) de retenue de l'airbag est formé au moins en partie par un dispositif (30;52) de guidage du gaz, par lequel le gaz d'un générateur de gaz (12) du module d'airbag peut être guidé dans l'airbag (14;68;74;80).

13. Module d'airbag selon la revendication 12,
**caractérisé en ce que** la languette (36,36';56) est découpée dans une paroi (58) du dispositif de guidage de gaz (30;52) de telle sorte qu'au moins la languette (36,36;56) repliée autour du bord de l'ouverture de fixation (50;72;78;84) libère une ouverture de passage de gaz (60), par laquelle le gaz peut être guidé dans l'airbag (14;68;74;80).

14. Module d'airbag selon l'une des revendications précédentes, **caractérisé en ce que** le dispositif (30;52) de retenue de l'airbag est relié à un corps de base (10) du module d'airbag, et qu'une section de l'airbag (14;68;74;80) est disposée entre le dispositif (30;52) de retenue de l'airbag et le corps de base (10).

15. Module d'airbag selon l'une des revendications 1 à 13, **caractérisé en ce**
**qu'**au moins une autre languette est formée sur le dispositif de retenue de l'airbag et/ou sur un corps de base du module d'airbag, qui porte le dispositif de retenue de l'airbag, et
**que** l'airbag est retenu au moins partiellement par la languette repliée autour d'un bord d'une ouverture, que comporte l'airbag, dans la zone de l'embouchure d'airbag au niveau du dispositif de retenue de l'airbag ou du corps de base.

16. Procédé pour fixer un airbag (14;68;74;80), qui comporte une embouchure (29) d'airbag et une section avant comportant au moins une ouverture de fixation (50;72;78;84), à un dispositif (30;52) de retenue de l'airbag avec au moins une languette repliable (36,36';56), selon lequel
sous l'effet d'un déplacement relatif entre au moins une zone de l'airbag (14;68;74;80) pourvue de l'ouverture de fixation (50;72;78; 84) et le dispositif (30;52) de retenue de l'airbag, la languette (36;36';56) est guidée dans l'ouverture de fixation (50; 72;78;84) et ensuite on la replie autour d'un bord de l'ouverture de fixation (50;72;78;84) et sous l'effet d'un déplacement relatif entre au moins une partie de l'airbag (14;68;74;80) pourvue de l'ouverture de fixation (50;72;78;84) et du dispositif (30,52) de retenue de l'airbag, on introduit le dispositif (30;52) de retenue de l'airbag au moins partiellement dans l'airbag (14;68;74;80).
